# EUROPEAN PATENT APPLICATION

(11) **EP 3 447 704 A1**
(43) Date of publication of application: **27.02.2019**
(21) Application number: 18190503.5
(22) Date of filing: 23.08.2018
(51) Int. Cl.: G06Q 20/20

(54) **CHECKOUT APPARATUS**

(30) Priority: 25.08.2017 JP 2017162451
(71) Applicant: Toshiba TEC Kabushiki Kaisha, Tokyo 141-8562 (JP)
(72) Inventor: INOUE, Akiko, Shinagawa-ku,, Tokyo 141-8562 (JP)
(74) Representative: Takeuchi, Maya

(57) **Abstract**

A checkout apparatus includes a scanner configured to scan a barcode, a printer configured to print a receipt, and a processor. The processor is configured to control the scanner to scan the barcode attached to each of a plurality of commodities, group the scanned commodities into a plurality of groups, generate first information for a first receipt of all of the scanned commodities and a plurality of pieces of second information each for second receipts of the grouped commodities, and control the printer to print the first receipt and the second receipts separately based on the generated first information and pieces of second information.

## Description

### FIELD

The present invention relates to the field of a sales data processing technology in general, and embodiments described herein relate in particular to a checkout apparatus.

### BACKGROUND

At a grocery store, a commodity to be purchased by a customer is registered by a point-of-sales (POS) terminal for subsequent checkout process.

Recently, a POS terminal has a function of grouping the purchased commodities so that two or more customers can separately make payments for their respective group of commodities and receive the receipts for them.

Such a POS terminal carries out a series of operations including dividing a statement for the group of commodities, generating each statement, and checking out for each customer, which may take a long time depending on the number of divided statements. Thus, there is need for a POS terminal that can streamline the above process.

### SUMMARY OF INVENTION

To solve such problem, there is provided a checkout apparatus comprising:
a scanner configured to scan a barcode;
a printer configured to print a receipt; and
a processor configured to:
   control the scanner to scan the barcode attached to each of a plurality of commodities;
   group the scanned commodities into a plurality of groups;
   generate first information for a first receipt of all of the scanned commodities and a plurality of pieces of second information each for second receipts of the grouped commodities; and
   control the printer to print the first receipt and the second receipts separately based on the generated first information and pieces of second information.

Preferably, the processor is configured to assign a different transaction number to each of the second receipts.

Preferably still, the processor is configured to generate:
the first information including a name of each of the scanned commodities and a price of each registered commodity; and
the pieces of second information each including names of the grouped commodities and prices of the grouped commodities.

Preferably yet, the processor is configured to generate:
the first information including a total price of the scanned commodities, an amount of payment, and a change paid to a customer; and
the pieces of second information not including the total price, the amount of payment, and the change.

Suitably, the processor is configured to divide a total amount of consumption tax on all of the scanned commodities in such a manner as to be equal to a sum of amounts of consumption tax on the grouped commodities.

Suitably still, the processor is configured to generate:
the first information including the total amount of consumption tax; and
the pieces of second information each including the amounts of consumption tax on the grouped commodities.

Suitably yet, the processor is configured to add a difference, which results from subtracting the sum of the amounts of consumption tax on the grouped commodities from the total amount of consumption tax, to one of the amounts of consumption tax on the grouped commodities.

Typically, the checkout apparatus further comprises;
a touch screen configured to display a screen and accept an input operation from an operator,
wherein the processor is configured to control the touch screen to display information about the scanned commodities.

Typically still, the processor is configured to control the touch screen to display the information such that each of the scanned commodities is selectable as a grouped commodity.

Typically yet, the processor is configured to group the scanned commodities according to a selection made by the operator via the touch panel.

The invention also relates to a method performed by a checkout apparatus, the method comprising:
scanning a barcode attached to each of a plurality of commodities;
grouping the scanned commodities into a plurality of groups;
generating first information for a first receipt of all of the scanned commodities and a plurality of pieces of second information each for second receipts of the grouped commodities; and
printing the first receipt and the second receipts separately based on the generated first information and pieces of second information.

Preferably, in the method, a different transaction number is assigned to each of the second receipts.

Preferably still, said generating comprises:
generating the first information including a name of each of the scanned commodities and a price of each registered commodity; and
generating the pieces of second information each including names of the grouped commodities and prices of the grouped commodities.

Preferably yet, said generating comprises:
generating the first information including a total price of the scanned commodities, an amount of payment, and a change paid to a customer; and
generating the pieces of second information not including the total price, the amount of payment, and the change.

Suitably, in the method, a total amount of consumption tax on all of the scanned commodities is divided in such a manner as to be equal to a sum of amounts of consumption tax on the grouped commodities.

Suitably still, in the method, said generating comprises:
the first information including the total amount of consumption tax; and
the pieces of second information each including the amounts of consumption tax on the grouped commodities.

Suitably yet, in the method,
the generating comprising adding a difference, which results from subtracting the sum of the amounts of consumption tax on the grouped commodities from the total amount of consumption tax, to one of the amounts of consumption tax on the grouped commodities.

Typically, the method further comprises;
displaying information about the scanned commodities on a screen of the checkout apparatus.

Typically still, in the method,,
the displaying comprises displaying the information such that each of the scanned commodities is selectable as a grouped commodity via the touch panel.

The invention also concerns a non-transitory computer readable medium storing a program causing a computer to execute a checkout process comprising the steps of:
scanning a barcode attached to each of a plurality of commodities;
grouping the scanned commodities into a plurality of groups;
generating first information for a first receipt of all of the scanned commodities and a plurality of pieces of second information each for second receipts of the grouped commodities; and
printing the first receipt and the second receipts separately based on the generated first information and pieces of second information.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective diagram of an external appearance of a POS terminal apparatus according to an embodiment.
FIG. 2 is a hardware block diagram illustrating an example of a hardware configuration of the POS terminal apparatus.
FIG. 3 is a block diagram illustrating an example of a functional configuration of the POS terminal apparatus.
FIG. 4 is a diagram for describing processing that divides commodities that are to be purchased.
FIGs. 5A, 5B, and 5C are diagrams, each illustrating an example of a specification slip and a receipt that are issued by the POS terminal apparatus.
FIG. 6 is a diagram for describing processing that proportionally divides an amount of consumption tax, which is performed by the POS terminal apparatus.
FIG. 7 is a sequence diagram illustrating an example of a flow of payment processing that is performed by the POS terminal apparatus.
FIG. 8 is a flowchart illustrating an example of a flow of processing that is performed by the POS terminal apparatus.

### DETAILED DESCRIPTION

An embodiment of the present invention provides a checkout apparatus, a method performed by the checkout apparatus, and a computer readable medium storing a program causing a computer to execute the checkout process, that are capable of dividing commodities into a plurality of groups of commodities and issuing a receipt of each of the groups with one-time payment processing.

A checkout apparatus according to an embodiment includes a scanner configured to scan a barcode, a printer configured to print a receipt, and a processor. The processor is configured to control the scanner to scan the barcode attached to each of a plurality of commodities, group the scanned commodities into a plurality of groups, generate first information for a first receipt of all of the scanned commodities and a plurality of pieces of second information each for second receipts of the grouped commodities, and control the printer to print the first receipt and the second receipts separately based on the generated first information and pieces of second information.

### Description of Schematic Configuration of a POS Terminal Apparatus

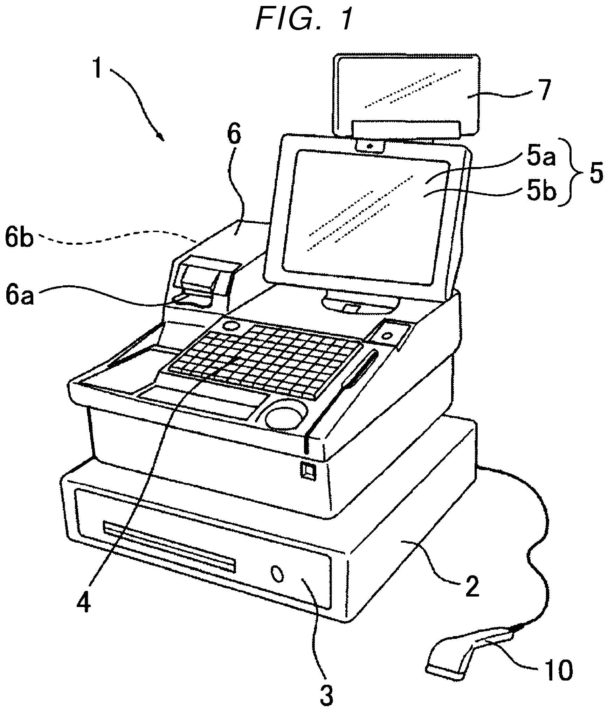

FIG. 1 is a perspective diagram of an external appearance of a POS terminal apparatus (a checkout apparatus) 1. The POS terminal apparatus 1 is installed, for example, in a store such as a supermarket, and performs registration processing that registers commodity information on a commodity that is purchased by a customer and payment processing of the commodity that is registered by the registration processing.

The POS terminal apparatus 1 is placed on a cash drawer 2 and is used there. The cash drawer 2 includes a drawer 3 in which cash or the like is stored. The POS terminal apparatus 1 controls an operation of opening and closing of the drawer 3.

The POS terminal apparatus 1 includes a keyboard 4, a dedicated-to-a-cashier display 5, a receipt printer (a printer) 6, a dedicated-to-a-customer display 7, and a barcode reader or scanner 10.

The keyboard 4 and the dedicated-to-a-cashier display 5 are user interfaces and are arranged on an upper surface of the POS terminal apparatus 1, with the keyboard 4 on the front side of the upper surface and the dedicated-to-a-cashier display 5 on the rear side.

The keyboard 4 is a part of input device, and includes a plurality of keys, such as numeric keys, a cancelation key, a return key, a subtotal key, and a sum total key. The numeric keys are a keypad for inputting numeric values such as a commodity code or a price. The cancelation key is a key for canceling an operation when an error or the like occurs. The return key is a key for canceling a current operation and returning to an immediately preceding screen. The subtotal key is a key for completing sales registration and declaring calculation of a total amount of sales. The sum total key is a key for confirming contents that are input and performing the payment processing (checkout processing).

The dedicated-to-a-cashier display 5 includes a display device 5a, such as a liquid crystal display (LCD), and a touch panel 5b that is laminated on a surface of the display device 5a. The display device 5a displays for a cashier processing states such as the registration processing or the payment processing on a screen. The touch panel 5b detects cashier's pushing-down on the screen, a button, or the like, which is displayed on the display device 5a, and controls operation of the POS terminal apparatus 1 according to a position at which the pushing-down takes place.

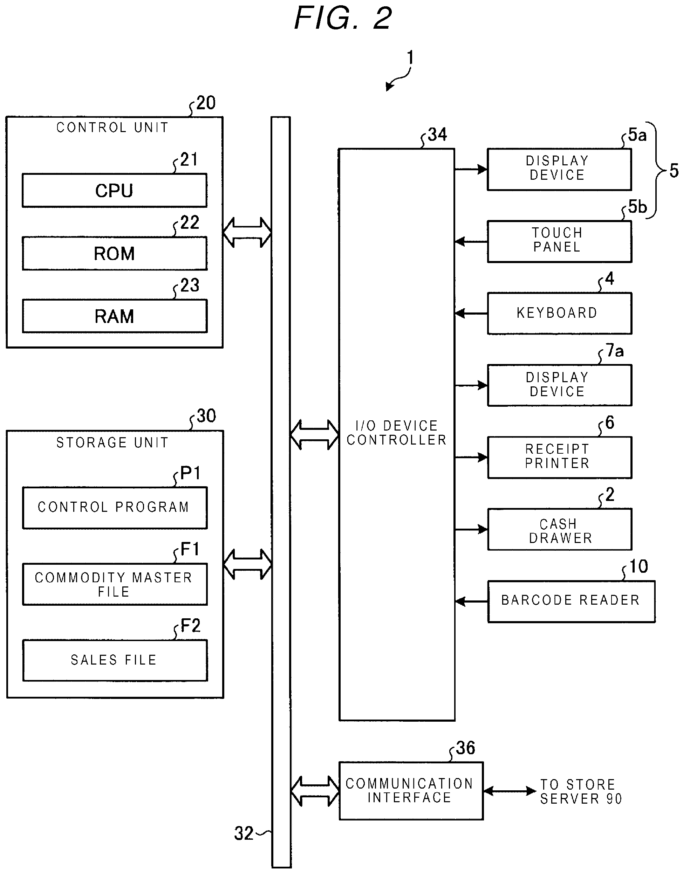

The receipt printer 6 is positioned on the left side of an upper surface of the POS terminal apparatus 1, and prints a specification slip and a receipt that are to be delivered to a customer. Furthermore, the receipt printer 6 includes an issuance opening 6a, and issues the printed specification slip and receipt. The receipt printer 6 transports the roll paper 6b, which is installed inside of the receipt printer 6 itself, using a roller that is rotatably driven with a pulse motor (not illustrated), and performs paper feeding from the issuance opening 6a in a paper feeding direction. At this time, the receipt printer 6, for example, prints the specification slip and the receipt on the roll paper 6b using a thermal head (not illustrated). It is noted that specification information that is data which is to be printed on the specification slip, and receipt information that is data which is to be printed on the receipt are generated by a CPU 21 (refer to FIG. 2), and is transmitted to the receipt printer 6.

The dedicated-to-a-customer display 7 has a display device 7a (refer to FIG. 2), such as the LCD, and is positioned on the rear side of the upper surface of the POS terminal apparatus 1. The dedicated-to-a-customer display 7 is positioned in such a manner that a display surface thereof faces a customer. The dedicated-to-a-customer display 7 displays a price of a commodity that is registered, a total price, a result of dividing commodities into a plurality of groups of commodities when a receipt is division-issued, and the like.

Moreover, the barcode reader 10, which reads code data that is retained by the barcode that is attached to a commodity, is connected to the POS terminal apparatus 1. The barcode reader 10 decodes a light receiving signal in the code data, acquires code data (a commodity code that specifies a commodity) that is expressed by the barcode, and output the acquired code data to the CPU 21 (refer to FIG. 2) of the POS terminal apparatus 1.

### Description of a Hardware Configuration of the POS Terminal Apparatus

Next, a hardware configuration of the POS terminal apparatus 1 will be described with reference to FIG. 2. FIG. 2 is a hardware block diagram illustrating an example of the hardware configuration of the POS terminal apparatus 1. As illustrated in FIG. 2, the POS terminal apparatus 1 includes a control unit 20 for controlling each unit of the POS terminal apparatus 1 itself. The control unit 20 has a configuration, like that of a general-purpose computer, that includes a central processing unit (a processor, CPU) 21, a read only memory (ROM) 22, and a random access memory (RAM) 23. The CPU 21 loads various programs, which are stored in the ROM 22 or a storage unit 30, onto the RAM 23. The CPU 21 operates according to the various programs that are loaded onto the RAM 23, and manages control of the entire POS terminal apparatus 1.

The control unit 20 is connected to the storage unit 30, an I/O device controller 34, and a communication interface 36 through a bus line 32.

The storage unit 30 is a non-volatile memory, such as a flash memory, that, although powered off, retains a storage memory. Programs that include a control program PI, and the like are stored in the storage unit 30. The control program PI is a program for causing a function, which the POS terminal apparatus 1 has, to be performed. Furthermore, a commodity master file F1 and a sales file F2 are stored in the storage unit 30.

The commodity master file F1 is a master file in which a commodity code, and a commodity name, a commodity price, and the like are stored in a state of being associated with each other. Because contents of the commodity master file F1 are updated on a daily basis, new contents are periodically received from a store server 90 through the communication interface 36.

The sales file F2 is a file in which a result of the POS terminal apparatus 1 performing the payment processing is stored as a sales history. At a fixed time, such as at a certain time after normal business hours every day, the sales file F2 is transmitted to the store server 90 through the communication interface 36. The sales file F2 that is transmitted is used when sales management of the store is performed in the store server 90. Furthermore, if a customer requests return or replacement of the commodity, the sales file F2 is used when a transaction number that is recorded on the receipt which is carried by the customer is collated to confirm that the commodity in question was the one purchased by the customer.

The I/O device controller 34 is connected to the control unit 20 and various peripheral devices, that is, the display device 5a, the touch panel 5b, the keyboard 4, the display device 7a, the receipt printer 6, the cash drawer 2, and the barcode reader 10. The I/O device controller 34 controls each of the peripheral devices that are connected, based on a command from the control unit 20. It is noted that a function of each of the peripheral devices is as described above.

The communication interface 36 is an interface for communicating with the store server 90 through a network such as a local area network (LAN) within the store. Specifically, the control unit 20 of the POS terminal apparatus 1 performs communication with the store server 90 through the communication interface 36, and receives the commodity master file F1 and the like that are stored in the store server 90. Furthermore, the control unit 20 of the POS terminal apparatus 1 transmits the sales file F2 to the store server 90 through the communication interface 36.

### Description of a Functional Configuration of the POS Terminal Apparatus

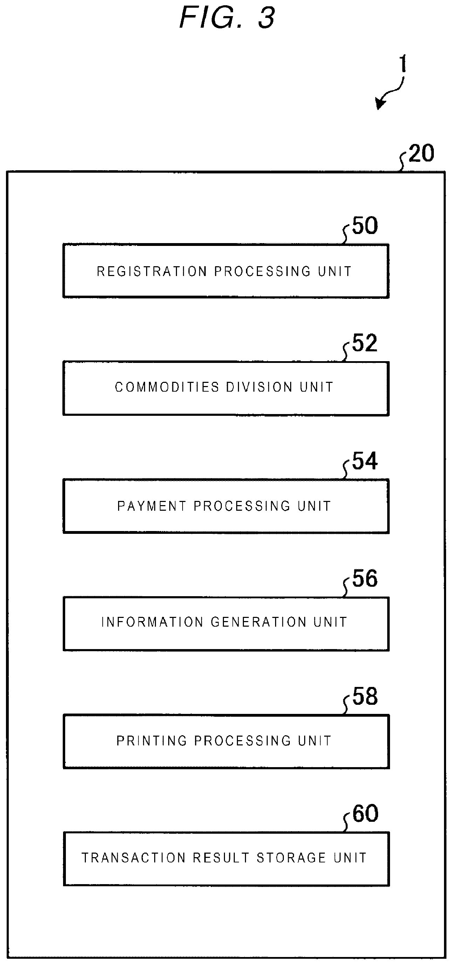

Next, a functional configuration of the POS terminal apparatus 1 will be described. FIG. 3 is a block diagram illustrating an example of the functional configuration of the POS terminal apparatus 1. The CPU 21 of the control unit 20 loads the control program PI in the storage unit 30 onto the RAM 23. The control unit 20 operates according to the control program PI, and generates each of the functional units, which are illustrated in FIG. 3, on the RAM 23. Specifically, the control unit 20 realizes a registration processing unit 50, a commodities division unit 52, a payment processing unit 54, an information generation unit 56, a printing processing unit 58, and a transaction result storage unit 60, as the functional units.

The registration processing unit 50 registers a commodity code, a quantity, and the like, of a commodity that is to be purchased by a customer.

When a customer makes a request for divisional issuance of a receipt, the commodities division unit 52 divides commodities to be purchased by the customer into a plurality of groups of commodities.

The payment processing unit 54 performs the payment processing of the commodity that is registered by the registration processing unit 50.

Based on a result of the payment processing unit 54 performing the payment processing, the information generation unit 56 generates specification information (specification slip) on a commodity and receipt information for each of the groups that result from the division by the commodities division unit 52.

The printing processing unit 58 prints the specification information on the commodity and the receipt information for each of the groups.

The result of the payment processing unit 54 performing the payment processing is stored in the transaction result storage unit 60.

### Description of Division Processing

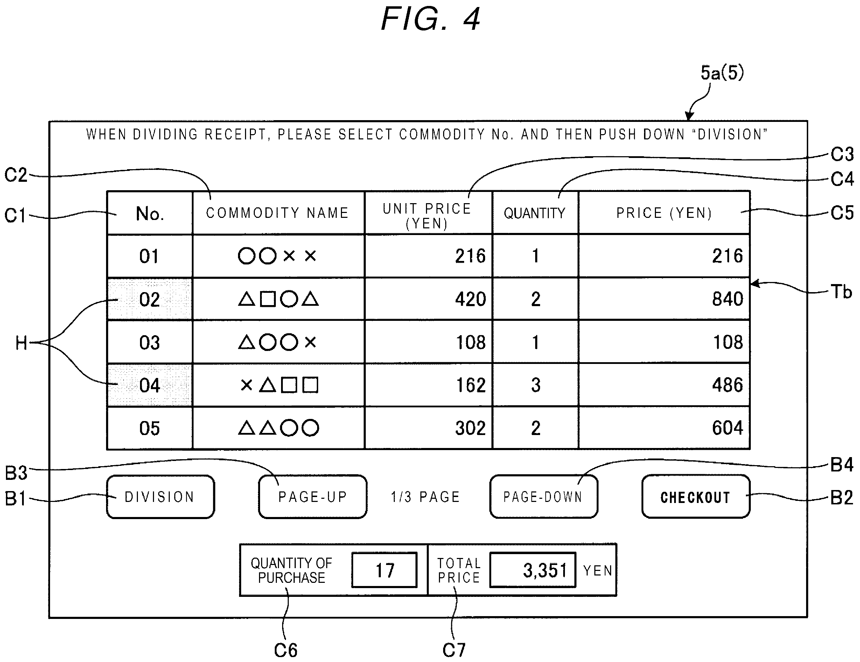

Next, processing (hereinafter referred to as division processing) that divides commodities which are purchased by a customer into a plurality of groups of commodities, which is performed by the commodities division unit 52 when the customer makes a request for the division issuance of a receipt will be described with reference to FIG. 4.

FIG. 4 is a diagram for describing the processing that divides commodities that are to be purchased. Particularly, FIG. 4 illustrates a situation where a list of commodities which are to be purchased by a customer is displayed on the display device 5a and where a cashier selects commodities, a receipt of which is division-issued, listening to a customer's request.

At this time, a commodity list Tb, registration in which is performed by the registration processing unit 50, is displayed on the display device 5a. The commodity list Tb, as illustrated in FIG. 4, includes a number field C1 in which commodity numbers are assigned in order that commodities are registered, a commodity name field C2, a unit price field C3, a number-of-purchase-points field C4, and a price field C5. Furthermore, a division button B1, a checkout button B2, a page-up button B3, and a page-down button B4 are displayed on the display device 5a. Moreover, a quantity of purchase field C6 and a total price field C7 are displayed on the display device 5a. It is noted that the commodity list Tb is also displayed on the dedicated-to-a-customer display 7. Therefore, the contents of the commodity list Tb can also be checked by the customer.

The cashier selects commodities of which a receipt is division-issued, then pushes down the division button B1, and thus confirm that the receipt is division-issued.

The checkout button B2 is a button for providing an instruction to perform the payment processing. When the cashier confirms the division issuance of the receipt and the checkout button B2, the POS terminal apparatus 1 performs the payment processing and receipt division issuance processing.

The page-up button B3 and the page-down button B4 are buttons for paging up and paging down the commodity list Tb. That is, when the cashier pushes down the page-down button B4 on the display as shown in FIG. 4, the commodities with commodity No. 06 or greater are displayed on the commodity list Tb. It is noted that the commodity list Tb in FIG. 4 shows that the first page, among three pages of the commodity list Tb, is displayed. When the first page of the commodity list Tb is displayed in this manner, because a page that precedes the first page is not present, hatching may be performed on the page-up button B3 in such a manner that a page-up operation is no longer performed. In the same manner, when the third page, which is the final page of the commodity list Tb in FIG. 4, is displayed, the hatching may be performed on the page-down button B4 in such a manner that a page-down operation is no longer performed.

A customer transfers commodity numbers or commodity names for commodities, of which receipt he/she desires to have separately, to the cashier, while viewing the commodity list Tb that is displayed on the dedicated-to-a-customer display 7. The cashier pushes down the commodity number that is displayed in the number field C1 for the commodity, according to the customer's request.

When a commodity number that is displayed in the number field C1 is pushed, the corresponding commodity is selected. When the commodity is selected, patching H is added to the number field C1, and thus the cashier and the customer are notified that the commodity is selected. FIG. 4 illustrates that a commodity with commodity No. 02 and a commodity with commodity No. 04 are selected. It is noted that a commodity number that is displayed in the number field C1 is pushed down and thus a commodity with the pushed-down commodity number is selected, but that, without any limitation to this example, for instance, a commodity name that is displayed in the commodity name field C2 is pushed down and thus a commodity with the pushed-down commodity name may be selected. In this case, the hatching H is added to the number field C1 and the commodity name field C2, or the hatching H is added to one of the number field C1 and the commodity name field C2, and thus the cashier and the customer may be notified that the commodity is selected.

In the state in FIG. 4, that is, in the state where commodity No. 02 and commodity No. 04 are selected, when the cashier pushes down the division button B1, it is confirmed that a receipt of commodities with commodity No. 02 and commodity No. 04 is separately issued from a receipt of the other commodities.

If there are many items of the registered commodities, a list that is illustrated in FIG. 4 may be displayed over a plurality of pages. In such a case, the cashier pushes down the page-down button B4 and the page-up button B3 and performs the paging-up and the paging-down. Then, on each page, selection of a commodity of which a receipt is to be division-issued separately is performed. It is noted that the division button B1 may be pushed down each time the selection of the commodity is completed on each page, or that the division button B1 may be pushed down when the selection of the commodity is completed on all pages.

It is noted that, at this point, the example where commodities are divided into two groups of commodities is described, but that the number of groups resulting from the division is not limited to 2. That is, commodities may be divided into three or more groups of commodities. In such a case, because screen in FIG. 4 is a graphical user interface (GUI) screen that assumes the division into two groups, a GUI screen on which the division into three or more groups is performed may be used.

For example, a button (not illustrated) for assigning the number of groups resulting from the division is installed, and with the button, for example, "3" that is the number of the groups resulting from the division is assigned. Then, the POS terminal apparatus 1 displays a message "Please select a commodity in the second group" for a customer, and causes the commodity in the second group to be selected. For the selection of the commodity, as described above, the number field C1 may be selected and then the division button B1 may be pushed down. The selection of the commodity in the second group is confirmed, the POS terminal apparatus 1 then displays a message "Please select a commodity in the third group" and causes a commodity in the third group to be selected. Then, when the selection of the commodity in the third group is confirmed, the POS terminal apparatus 1 completes the division of the commodities.

### Description of the Specification Slip and the Receipt that are issued by the POS Terminal Apparatus

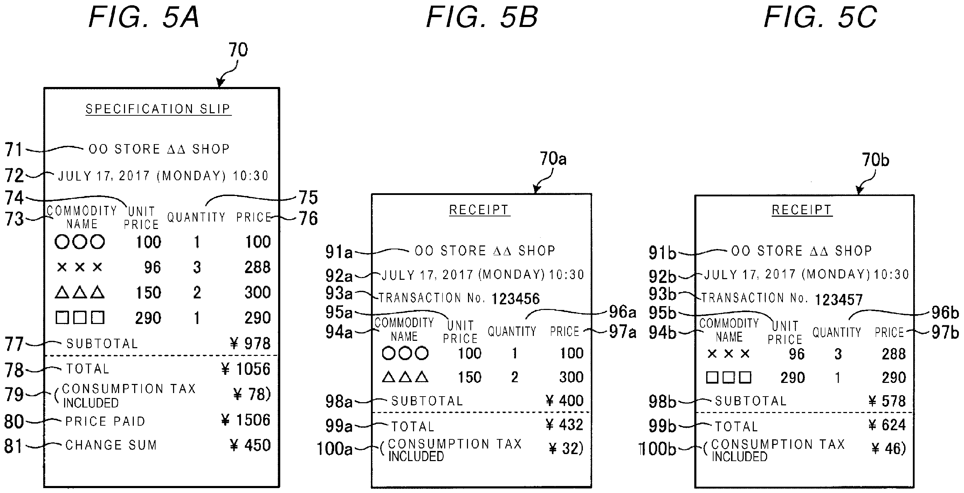

Next, the specification slip and the receipt that are issued by the POS terminal apparatus 1 will be described with reference to FIG. 5. FIGs. 5A, 5B, and 5C are diagrams, each illustrating an example of the specification slip and the receipt that are issued by the POS terminal apparatus 1.

First, contents of specification slip 70 that is illustrated in FIG. 5A will be described. The specification slip 70 shows specification information on a commodity. As illustrated in FIG. 5A, the specification slip 70 (the specification information) includes information indicating details of all commodities that were purchased. That is, the specification slip 70 includes a store name 71, a payment date and time 72, a commodity name 73, a unit price 74, a quantity 75, a price 76, a subtotal 77, a total 78, an amount of consumption tax 79, a price paid 80, and a change sum 81.

Printed on the specification slip 70 are the commodity name 73, the unit price 74, the quantity 75, and the price 76 of each of all the commodities of which the payment processing is performed by the POS terminal apparatus 1. That is, an example in FIG. 5A illustrates that four types of commodities are purchased. The subtotal 77 is a sum value of commodities in the price 76. The total 78 is a total price after applying a consumption tax to the subtotal 77. The amount of consumption tax 79 shows an amount of consumption tax on the purchased commodities. Furthermore, the price paid 80 that is paid by a customer and the change sum 81 are printed on the specification slip 70.

Next, FIGs. 5B and 5C illustrate examples of receipts 70a and 70b, respectively, which are division-issued separately from each other. It is noted that, in the present embodiment, it is assumed that division issuance is performed on a commodity ××× and a commodity □□□ among commodities that are printed on the specification slip 70. That is, the receipt 70a is a receipt showing that a commodity ○○○ and a commodity ΔΔΔ are purchased, excluding the commodity × × × and the commodity □□□ from all commodities that are purchased. Furthermore, the receipt 70b is a receipt showing that the commodity × × × and the commodity □□□ are purchased, division issuance for whose receipt is requested.

Each of the receipts 70a and 70b (pieces of receipt information) includes details of commodities in every group that results from the division. That is, the receipt 70a includes a store name 91a, a payment date and time 92a, a transaction number 93a, a commodity name 94a, a unit price 95a, a quantity 96a, a price 97a, a subtotal 98a, and a total 99a, and an amount of consumption tax 100a.

Furthermore, the receipt 70b includes a store name 91b, a payment date and time 92b, a transaction number 93b, a commodity name 94b, a unit price 95b, a quantity 96b, a price 97b, a subtotal 98b, and a total 99b, and an amount of consumption tax 100b.

The transaction numbers 93a and 93b are identification numbers that uniquely specify the receipts 70a and 70b, respectively. In examples in FIGs. 5B and 5C, serial numbers are assigned as the transaction numbers 93a and 93b, respectively. However, the transaction numbers 93a and 93b do not need to be limited to the serial number. Random numbers or branch number may be assigned to the transaction numbers 93a and 93, respectively. If the branch number is assigned, for example, the transaction number 93a of the receipt 70a may be set to 123456-1, and the transaction number 93b of the receipt 70b may be set to 123456-2. If the purchased commodity needs to be returned, in a store, the POS terminal apparatus 1 reads the transaction number 93a (93b) of the receipt 70a (70b) that is carried by a customer and specifies contents of the commodity that is purchased by the customer. If a return condition is satisfied, the return of the commodity is accepted.

The consumption tax 79 that is printed on the specification slip 70 is a sum value of the amount of consumption tax 100a that is printed on the receipt 70a, and the amount of consumption tax 100b that is printed on the receipt 70b. However, when calculation of a consumption tax is performed, for example, a calculation rule that is determined in every store applies such as rounding down numerical figures after a decimal point to the nearest decimal or rounding off numerical figures after a decimal point to the nearest decimal. For this reason, depending on the situation, there occurs a case where the consumption tax 79 that is printed on the specification slip 70, and the sum value of the amount of consumption tax 100a that is printed on the receipt 70a, and the amount of consumption tax 100b that is printed on the receipt 70b are not consistent with each other. For this reason, the information generation unit 56 of the POS terminal apparatus 1 performs processing that proportionally divides the consumption tax 79 that is printed on the specification slip 70 into the amount of consumption tax 100a that is printed on the receipt 70a and the amount of consumption tax 100b that is printed on the receipt 70b. The details of the processing will be described later.

Furthermore, the price paid 80 and the change sum 81 are not printed on the receipts 70a and 70b. This reason is that, because the prices are collectively paid when payment is performed, a price that is to be paid for every commodity that is printed on each of the receipt 70a and 70b cannot be specified.

### Description of Processing that Proportionally Divides the Amount of Consumption Tax

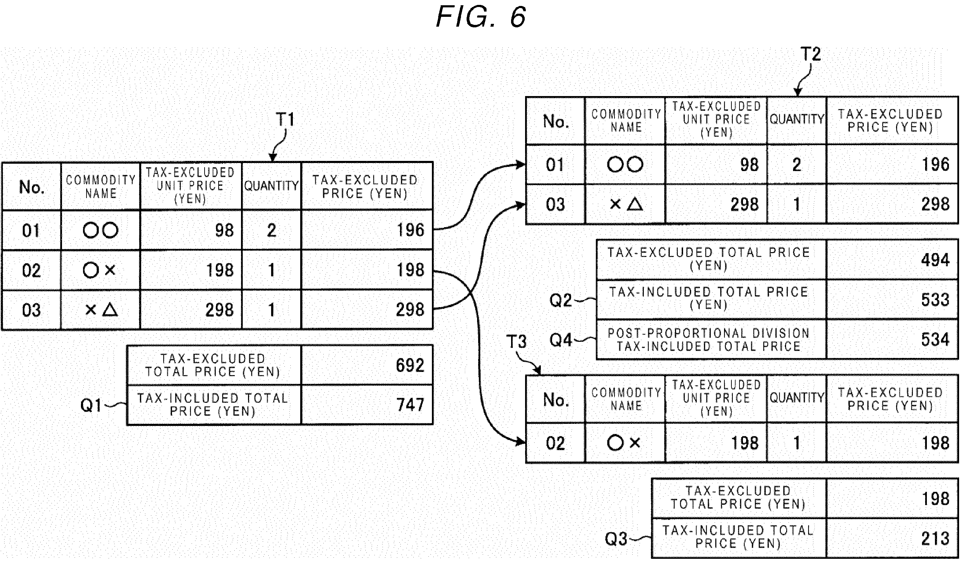

Next, the processing that proportionally divides the amount of consumption tax is described, which is performed by the information generation unit 56 of the POS terminal apparatus 1. FIG. 6 is a diagram for describing the processing that proportionally divides the amount of consumption tax, which is performed by the POS terminal apparatus 1.

A commodity list T1 that is illustrated in FIG. 6 shows a list of commodities on which the payment processing is performed by the POS terminal apparatus 1. Further, the commodity lists T2 and T3 show a list of commodities that belong to each of the groups that result from division that is performed in order to division-issue a receipt. That is, it is illustrated that one receipt is issued for a group to which a commodity ○○ and a commodity ×Δ that are shown in the commodity list T2 belong, and that one receipt is issued for a commodity ○× that is shown in the commodity list T3.

Based on prices of commodities that are described in the commodity lists T1, T2, and T3, the POS terminal apparatus 1 calculates the amount of consumption tax. That is, a tax-included total price Q1 for all commodities that are described in the commodity list T1 is calculated as 747 Yen.

Furthermore, a tax-included total price Q2 for all commodities that are described in the commodity list T2 is calculated as 533 Yen. Then, a tax-included total price Q3 for all commodities that are described in the commodity list T3 is calculated as 213 Yen.

At this point, the tax-included total price Q2 and the tax-included total price Q3 add up to 746 Yen. This value is not consistent with the tax-included total price Q1. The reason is that, when calculating consumption tax, numerical figures after a decimal point is rounded down to the nearest decimal.

The information generation unit 56 of the POS terminal apparatus 1 proportionally divides the tax-included total price Q1 into the tax-included total price Q2 and the tax-included total price Q3, in such a manner that a sum value of the tax-included total price Q2 and the tax-included total price Q3 is consistent with the tax-included total price Q1. Specifically, a difference in amount, which results from subtracting the sum value of the tax-included total price Q2 and the tax-included total price Q3 from the tax-included total price Q1, is added to the tax-included total price Q2 or the tax-included total price Q3. It is noted that which one of the tax-included total price Q2 and the tax-included total price Q3 the difference in amount is added to may be set in advance by the information generation unit 56. In the present embodiment, the difference in amount (1 Yen in the present example) is added to the tax-included total price Q2, and a result of the addition is defined as a post-proportional division tax-included total price Q4.

With the proportional division processing, the information generation unit 56 sets the post-proportional division tax-included total price Q4, which is associated with the commodities that are included in the commodity list T2, to 534 Yen. With the proportional division processing, the sum value of the post-proportional division tax-included total price Q4 and tax-included total price Q3 are consistent with the tax-included total price Q1.

### Description of a Sequence of Payment Processing that is Performed by the POS Terminal Apparatus

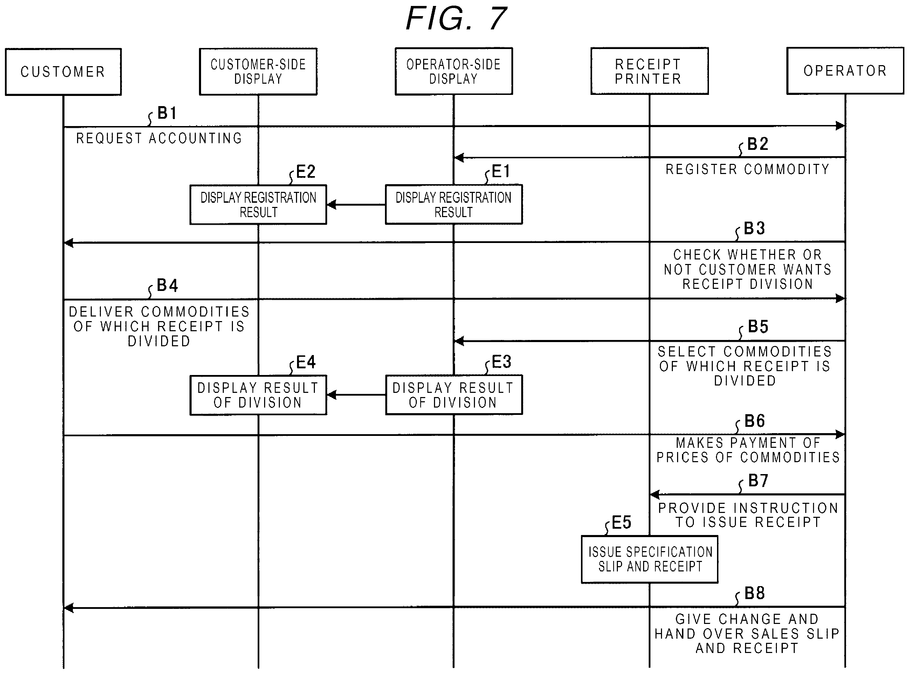

Next, a flow of the payment processing that is performed by the POS terminal apparatus 1 will be described with reference to FIG. 7, from the perspective of operations by a cashier and a customer. FIG. 7 is a sequence diagram illustrating an example of the flow of the payment processing that is performed by the POS terminal apparatus 1.

A customer hands over a commodity that is to be purchased, to a cashier and makes a request to a cashier for checkout (Act B1). The cashier registers the commodity that is to be purchased, with the POS terminal apparatus 1 (Act B2).

The commodity list Tb in which the commodity is registered is displayed on the display device 5a of the dedicated-to-a-cashier display 5 (Event E1). The commodity list Tb is also displayed on the dedicated-to-a-customer display 7 (Event E2).

The cashier checks whether or not the customer wants receipt division (Act B3). The customer informs the cashier of commodities a receipt of which is divided (Act B4).

The cashier receives a customer's instruction, and selects a commodity, which is a target of the receipt division, from the commodity list Tb (Act B5).

A result of the selection of the commodity that is the target for the receipt division, from the commodity list Tb is displayed on the display device 5a of the dedicated-to-a-cashier display 5 (Event E3). The result of the selection of the commodity that is the target for the receipt division is also displayed on the dedicated-to-a-customer display 7 (Event E4).

The customer pays the cashier for a price of the commodity that is to be purchased (Act B6). After the customer pays the cashier for the price of the commodity, the cashier instructs the receipt printer 6 to issue a specification slip and a receipt (Act B7).

The receipt printer 6 prints and issues the specification slip and the receipt (Event E5).

The cashier hands over the specification slip 70 and the receipts 70a and 70b that are issued, to the customer, along with a change (Act B8). The transaction is accordingly completed.

### Description of a Flow of the Processing that is Performed by the POS Terminal Apparatus

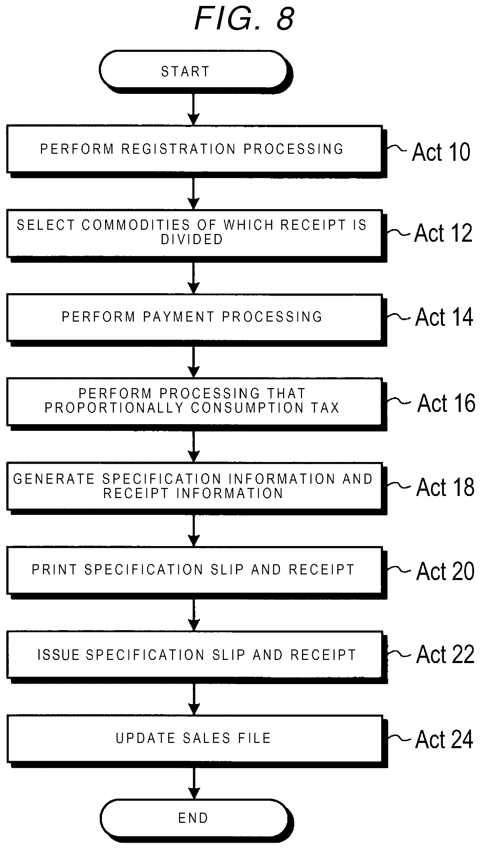

Next, with reference to FIG. 8, a flow of the processing that is performed by the POS terminal apparatus 1 will be described from the perspective of the processing that is performed by the POS terminal apparatus 1. FIG. 8 is a flowchart illustrating an example of the flow of the processing that is performed by the POS terminal apparatus 1.

The registration processing unit 50 performs the registration processing that registers a commodity that is to be purchased by the customer (Act 10).

The commodities division unit 52 divides commodities that are to be purchased by the customer into a plurality of groups of commodities (Act 12).

The payment processing unit 54 performs the payment processing (Act 14). It is noted that the payment processing does not perform the payment processing on each of the groups that result from the division by the commodities division unit 52, but collectively performs the payment processing on all commodities.

The information generation unit 56 performs the processing that proportionally divides the amount of consumption tax (Act 16).

The information generation unit 56 further generates the specification information and the receipt information (Act 18).

The printing processing unit 58 prints each of the specification information and the receipt information with the receipt printer 6 (Act 20). Then, the printing processing unit 58 issues the specification slip and the receipt that are printed (Act 22).

The control unit 20 controls the storage unit 30, and thus updates the sales file F2 (Act 24). Then, the POS terminal apparatus 1 ends a sequence of processing in FIG. 8.

As described above, with the POS terminal apparatus 1 according to an embodiment, the commodities division unit 52 divides the commodities, which are registered by the registration processing unit 50 into a plurality of groups of commodities. Then, the payment processing unit 54 performs the payment on the commodity. Based on a result of the payment performed by the payment processing unit 54, the information generation unit 56 creates the specification slip 70 showing details of all commodities that were purchased, and, along with this, based on a result of the division by the commodities division unit 52, generates the receipts 70a and 70b showing the details of the commodities in each of the groups that result from the division. Therefore, with one-time payment processing, a receipt of each group can be issued.

Furthermore, the POS terminal apparatus 1 according to the embodiment, the information generation unit 56 assigns the transaction numbers 93a and 93b to the receipt 70a and 70b of the groups, respectively. Therefore, even if the receipts 70a and 70b that result from the division are issued, because a purchase history can be referred to, and the return of the purchased commodity is possible.

Then, in the POS terminal apparatus 1 according to the embodiment, the information generation unit 56 assigns the price paid 80 that is paid by the customer and the change sum 81 only to the specification slip 70. Therefore, because an amount of information that is printed on the receipts 70a and 70b can be reduced, an amount of the consumed roll paper 6b can be suppressed.

Moreover, in the POS terminal apparatus 1 according to the embodiment, the information generation unit 56 proportionally divides the amount of consumption tax on all commodities that are purchased, which is assigned to the specification slip 70, in such a manner as to be equal to the sum value of the amounts of consumption tax on the commodities in each of the groups, which are assigned to the receipts 70a and 70b, respectively. Therefore, the tax-included total price Q1 that is printed on the specification slip 70, and the price that results from adding up the tax-included total prices Q4 and Q3, which are printed on the receipts 70a and 70b, respectively, can be consistent with each other. Because of this, the reliability of each of the receipts 70a and 70b that are division-issued is not degraded.

Furthermore, in the POS terminal apparatus 1 according to the embodiment, the information generation unit 56 adds the difference in amount, which results from subtracting the sum value of the amounts of the consumption tax on the commodities in the groups from the amount of consumption tax on all commodities that are purchased, to the amount of consumption tax on the commodities in the group that is determined in advance, and thus proportionally divides the amount of consumption tax on all the commodities. Therefore, with the simple processing, the amount of consumption tax can be proportionally divided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A checkout apparatus comprising:
a scanner configured to scan a barcode;
a printer configured to print a receipt; and
a processor configured to:
control the scanner to scan the barcode attached to each of a plurality of commodities;
group the scanned commodities into a plurality of groups;
generate first information for a first receipt of all of the scanned commodities and a plurality of pieces of second information each for second receipts of the grouped commodities; and
control the printer to print the first receipt and the second receipts separately based on the generated first information and pieces of second information.

2. The checkout apparatus according to claim 1,
wherein the processor is configured to assign a different transaction number to each of the second receipts.

3. The checkout apparatus according to claim 1 or 2,
wherein the processor is configured to generate:
the first information including a name of each of the scanned commodities and a price of each registered commodity; and
the pieces of second information each including names of the grouped commodities and prices of the grouped commodities.

4. The checkout apparatus according to any one of claims 1 to 3, wherein the processor is configured to generate:
the first information including a total price of the scanned commodities, an amount of payment, and a change paid to a customer; and
the pieces of second information not including the total price, the amount of payment, and the change.

5. The checkout apparatus according to any one of claims 1 to 4,
wherein the processor is configured to divide a total amount of consumption tax on all of the scanned commodities in such a manner as to be equal to a sum of amounts of consumption tax on the grouped commodities.

6. The checkout apparatus according to claim 5, wherein the processor is configured to generate:
the first information including the total amount of consumption tax; and
the pieces of second information each including the amounts of consumption tax on the grouped commodities.

7. The checkout apparatus according to claim 5 or 6,
wherein the processor is configured to add a difference, which results from subtracting the sum of the amounts of consumption tax on the grouped commodities from the total amount of consumption tax, to one of the amounts of consumption tax on the grouped commodities.

8. The checkout apparatus according to any one of claims 1 to 7, further comprising
a touch screen configured to display a screen and accept an input operation from an operator,
wherein the processor is configured to control the touch screen to display information about the scanned commodities.

9. The checkout apparatus according to claim 8,
wherein the processor is configured to control the touch screen to display the information such that each of the scanned commodities is selectable as a grouped commodity.

10. The checkout apparatus according to claim 8 or 9,
wherein the processor is configured to group the scanned commodities according to a selection made by the operator via the touch panel.

11. A method performed by a checkout apparatus, the method comprising the steps of:
scanning a barcode attached to each of a plurality of commodities;
grouping the scanned commodities into a plurality of groups;
generating first information for a first receipt of all of the scanned commodities and a plurality of pieces of second information each for second receipts of the grouped commodities; and
printing the first receipt and the second receipts separately based on the generated first information and pieces of second information.

12. The method according to claim 11, the method further comprises the step of,
assigning a different transaction number to each of the second receipts.

13. The method according to claim 11 or 12, wherein said generating step comprises:
generating the first information including a name of each of the scanned commodities and a price of each registered commodity; and
generating the pieces of second information each including names of the grouped commodities and prices of the grouped commodities.

14. The method according to any one of claims 11 to 13, wherein said generating step comprises:
generating the first information including a total price of the scanned commodities, an amount of payment, and a change paid to a customer; and
generating the pieces of second information not including the total price, the amount of payment, and the change.

15. A non-transitory computer readable medium storing a program causing a computer to execute a checkout process according to any one of claims 11 to 14.
